# EUROPÄISCHE PATENTSCHRIFT

(11) **EP 1 405 778 B1**
(45) Veröffentlichungstag und Bekanntmachung des Hinweises auf die Patenterteilung: **28.07.2010**
(21) Anmeldenummer: 03022541.1
(22) Anmeldetag: 02.10.2003
(51) Int. Cl.: B60S 5/06, B66F 9/075

(54) **Batteriewechselvorrichtung für ein Flurförderzeug**
Battery exchange device for industrial truck
Dispositif d'échange de batterie pour chariot de manutention

(30) Priorität: 04.10.2002 DE 10246221
(43) Veröffentlichungstag der Anmeldung: 07.04.2004
(73) Patentinhaber: STILL GmbH, 22113 Hamburg (DE)
(72) Erfinder: Funk, Christof, 23847 Schiphorst (DE); Sellhorn, Gerhard, 21035 Hamburg (DE)
(74) Vertreter: Geirhos, Johann

(56) Entgegenhaltungen:
- EP-A- 0 030 928
- EP-A- 1 095 831
- GB-A- 2 050 310
- US-A- 5 187 423
- US-A- 5 360 307
- US-A- 5 452 983
- US-A- 5 508 597

## Beschreibung

Die Erfindung betrifft ein System gemäß dem Oberbegriff des Anspruchs 1, umfassend ein Flurförderzeug mit einem Batterieblock und einer seitlichen Batterieentnahmeöffnung, sowie einer Handhabungseinrichtung mit einem Gabelhubwagen und einer auf den Gabelhubwagen aufsetzbaren Batterieaufnahme.

Eine Handhabungseinrichtung für Batterieblöcke von Gabelstaplern ist beispielsweise aus der DE 199 52 042 A1 bekannt. Hierbei kann auf einen handelsüblichen Hubwagen eine mit einer Rollenbahn versehene Batterieaufnahme aufgesetzt werden. Wenn der Hubwagen mit der Batterieaufnahme direkt neben dem Gabelstapler postiert wird, kann der Batterieblock von einer gabelstaplerfesten Rollenbahn auf die Rollenbahn der Batterieaufnahme geschoben werden.

Diese bekannte Handhabungseinrichtung ist sehr aufwändig in der Herstellung, insbesondere da das Batteriefach jedes einzelnen Flurförderzeugs mit einer Rollenbahn ausgerüstet werden muss.
Ein System mit den Merkmalen des Oberbegriffs des Anspruchs 1 ist aus der EP 0 030 928 A1 bekannt.

Der Erfindung liegt daher die Aufgabe zugrunde, ein System aus einem Flurförderzeug und einer Handhabungseinrichtung zur Verfügung zu stellen, das einen einfachen Aufbau der Handhabungseinrichtung ermöglicht.

Diese Aufgabe wird erfindungsgemäß durch die weiteren Merkmale des Anspruchs 1, wobei die Batterieaufnahme einen tragenden Rahmen aufweist, mit dem die Gewichtskraft des Batterieblocks auf einer Gabel des Gabelhubwagens abstützbar ist und an dem Rahmen der Batterieaufnahme mindestens ein Abstützelement befestigt ist, mit dem die Batterieaufnahme durch vollständiges Absenken der Gabel des Gabelhubwagens auf dem Boden absetzbar ist. Der Gabelhubwagen kann als Handhubwagen oder als elektrisch angetriebener Niederhubwagen ausgeführt sein. Das Batteriefach des beispielsweise als Gabelstapler oder Schubmaststapler ausgeführten Flurförderzeugs ist unten zumindest teilweise offen. Der in dem Flurförderzeug befindliche Batterieblock wird mit dem Gabelhubwagen und der darauf befindlichen Batterieaufnahme unterfahren. Wenn anschließend die Batterieaufnahme mittels des Gabelhubwagens angehoben wird, tritt die Batterieaufnahme mit dem Batterieblock in Kontakt und hebt diesen an. Anschließend kann der auf der Batterieaufnahme befindliche Batterieblock mittels des Gabelhubwagens aus dem Flurförderzeug heraus bewegt und weiter transportiert werden. Das Einsetzen eines neuen Batterieblocks in des Flurförderzeug erfolgt in umgekehrter Reihenfolge. Bei der erfindungsgemäßen Anordnung kann vollständig auf Rollenbahnen verzichtet werden, insbesondere müssen in dem Flurförderzeug keine Rollenbahnen oder sonstige Bewegungsvorrichtungen für den Batterieblock vorgesehen werden. Die Batterieaufnahme weist einen tragenden Rahmen auf, mit dem die Gewichtskraft des Batterieblocks auf einer Gabel des Gabelhubwagens abstützbar ist. Die Gabel des Gabelhubwagens besteht in der Regel aus zwei parallelen Gabelzinken. Der Rahmen, der die tragende Struktur der Batterieaufnahme bildet, steht direkt auf den Gabelzinken auf. Die Abstützelemente ermöglichen es, den Batterieblock gemeinsam mit der Batterieaufnahme auf dem Boden abzustellen. Diese Eigenschaft kann auch genutzt werden, um ungewünschte Bewegungen des Hubwagens mit dem darauf befindlichen Batterieblock, beispielsweise ein Wegrollen auf Gefällestrecken, zu verhindern.

Eine besonders stabile Konstruktion ergibt sich, wenn der tragende Rahmen der Batterieaufnahme im Wesentlichen aus rechteckigen Hohlprofilen besteht. Die Hohlprofile können beispielsweise durch Schweißen miteinander verbunden werden und zeichnen sich durch eine hohe Steifigkeit auf. Die rechteckige Profilform gewährleistet eine flächige Auflage des Rahmens auf den Gabeln des Hubwagens sowie des Batterieblocks auf dem Rahmen.

An dem Rahmen der Batterieaufnahme ist mindestens ein Führungselement befestigt, mit dem die Batterieaufnahme relativ zu der Gabel des Gabelhubwagens in seitlicher Richtung festgelegt ist. Die Führungselemente verhindern somit ein Verrutschen der Batterieaufnahme auf dem Gabelhubwagen.

Die Anzahl der einzelnen Bauteile kann reduziert werden, wenn das Führungselement und das Abstützelement von einem gemeinsamen Bauteil gebildet sind.

Die Batterieaufnahme weist einen vorzugsweise verstellbaren Anschlag für den Batterieblock auf. Der Anschlag bestimmt die Einfahrtiefe des Gabelhubwagens unter den Gabelstapler. Wenn der länglich ausgeführte Anschlag senkrecht zu den Gabeln des Gabelhubwagens ausgerichtet ist, erleichtert der Anschlag darüber hinaus ein gerades Aufnehmen des Batterieblocks. Wenn der Anschlag verstellbar ist, kann die selbe Batterieaufnahme für unterschiedliche Typen von Flurförderzeugen und Batterieblöcken eingesetzt werden.

Gemäß einer zweckmäßigen Weiterbildung umfasst die Handhabungseinrichtung eine Batterieablage, auf der der Batterieblock mittels der auf dem Gabelhubwagen befindlichen Batterieaufnahme abstellbar ist. Auf der Batterieablage kann der Batterieblock ohne die Batterieaufnahme, z.B. zum Laden des Batterieblocks abgestellt werden.

Eine zweckmäßige konstruktive Ausgestaltung sieht vor, dass die Batterieablage einen Längsbalken umfasst, der sich während des Abstellens des Batterieblocks zwischen den Gabelzinken der Gabel des Gabelhubwagens und gegebenenfalls zwischen zwei Abstützelementen der Batterieaufnahme befindet. Der Batterieblock kann somit im Wesentlichen mittig auf dem Längsbalken abgestellt werden.

Um ein seitliches Abkippen des Batterieblocks sicher zu verhindern, umfasst die Batterieablage einen Querbalken, der sich während des Abstellens des Batterieblocks vor der Gabel des Gabelhubwagens und unterhalb des Batterieblocks befindet.

Mit besonderem Vorteil sind der Längsbalken und/oder der Querbalken aus Holz ausgebildet. Die Ausbildung der Balken aus dem gegenüber Batteriesäure unempfindlichen und rutschfesten Material Holz ermöglicht einen besonders einfachen Aufbau.

Weitere Vorteile und Einzelheiten der Erfindung werden anhand des in den schematischen Figuren dargestellten Ausführungsbeispiels näher erläutert. Dabei zeigt
- Figur 1: eine erfindungsgemäßes System,
- Figur 2: einen Gabelhubwagen mit aufgesetzter Batterleaufnahme,
- Figur 3: einen Batterieblock auf einer Batterieablage.

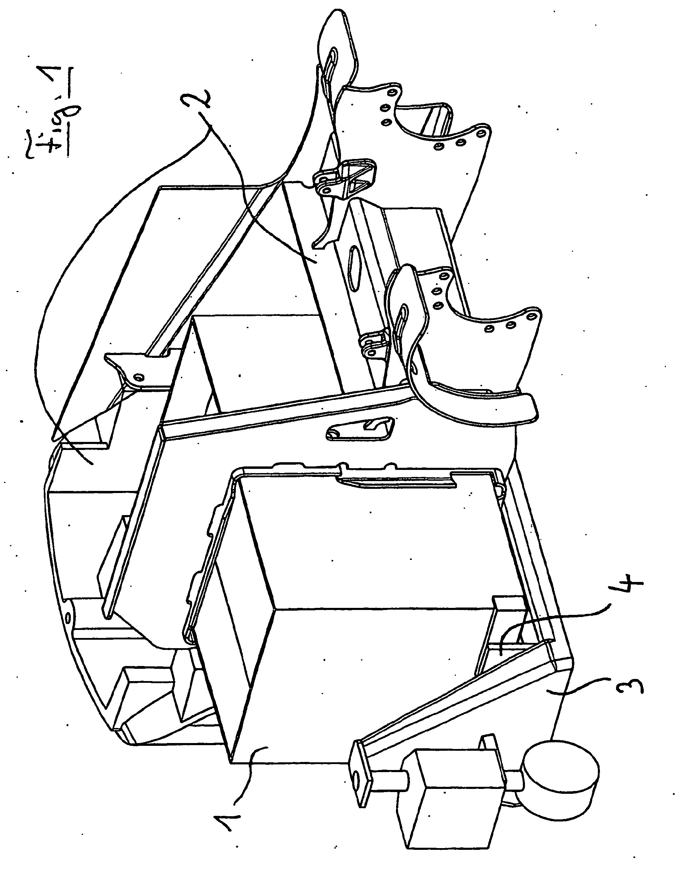

Figur 1 zeigt ein erfindungsgemäßes System für einen Batterieblock 1. Der Batterieblock 1 kann in seitlicher Richtung aus dem Rahmen 2 eines in diesem Ausführungsbeispiel als Gabelstapler ausgeführten Flurförderzeug entfernt werden. Die Handhabungsvorrichtung umfasst einen Gabelhubwagen 3, auf dessen Gabel eine Batterieaufnahme 4 aufgesetzt ist. In der dargestellten Position ist der Batterieblock 1 gemeinsam mit der Batterieaufnahme 4 mittels des Gabelhubwagens 3 angehoben, so dass der Batterieblock 1 relativ zu dem Rahmen 2 bewegt werden kann.

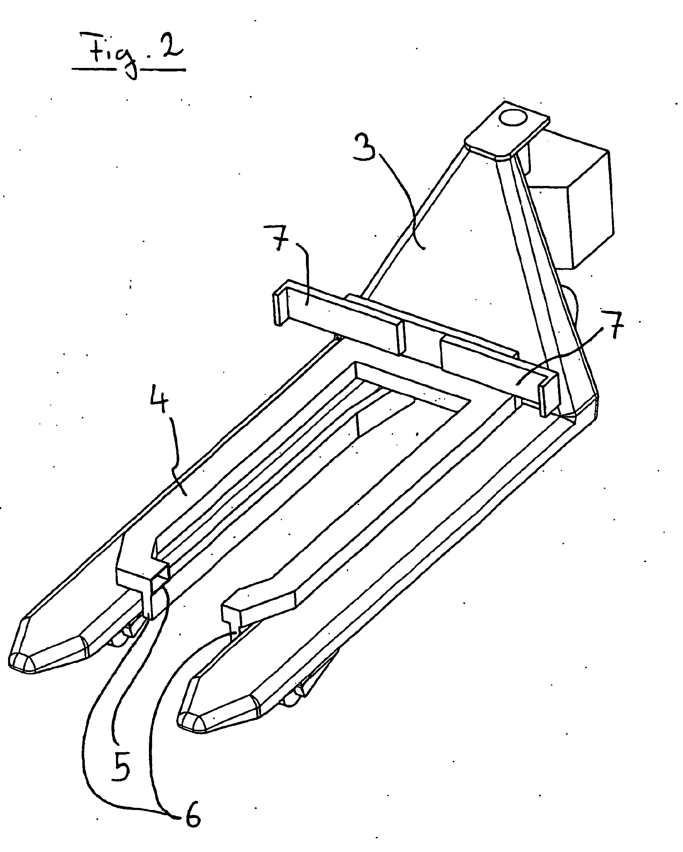

In Figur 2 ist der Gabelhubwagen 3 mit der darauf aufgesetzten Batterieaufnahme 4 dargestellt. Zu erkennen ist die Ausbildung eines tragenden Rahmens der Batterieaufnahme 4 aus Vierkantrohren 5. An der Unterseite der parallel zu den Gabelzinken des Gabelhubwagens 3 verlaufenden Vierkantrohre 5 erstrecket sich jeweils ein Bauteil 6 nach unten, das gleichzeitig die Funktion eines Führungselements, mit dem die Batterieaufnahme 4 in seitlicher Richtung auf dem Gabelhubwagen 3 festgelegt ist, und eines Abstützelements, mit dem die Batterieaufnahme 4 durch Absenken der Gabel des Hubwagens auf dem Boden abgestellt werden kann, aufweist. An der Hinterseite der Batterieaufnahme 4 befindet sich ein Anschlag 7, der die Einfahrtiefe des Hubwagens und damit der Batterieaufnahme 4 unter ein Flurförderzeugs festlegt. Aufgrund seiner länglichen Ausbildung ist der Anschlag 7 darüber hinaus geeignet, den Batterieblock 1 auf der Batterieaufnahme 4 auszurichten.

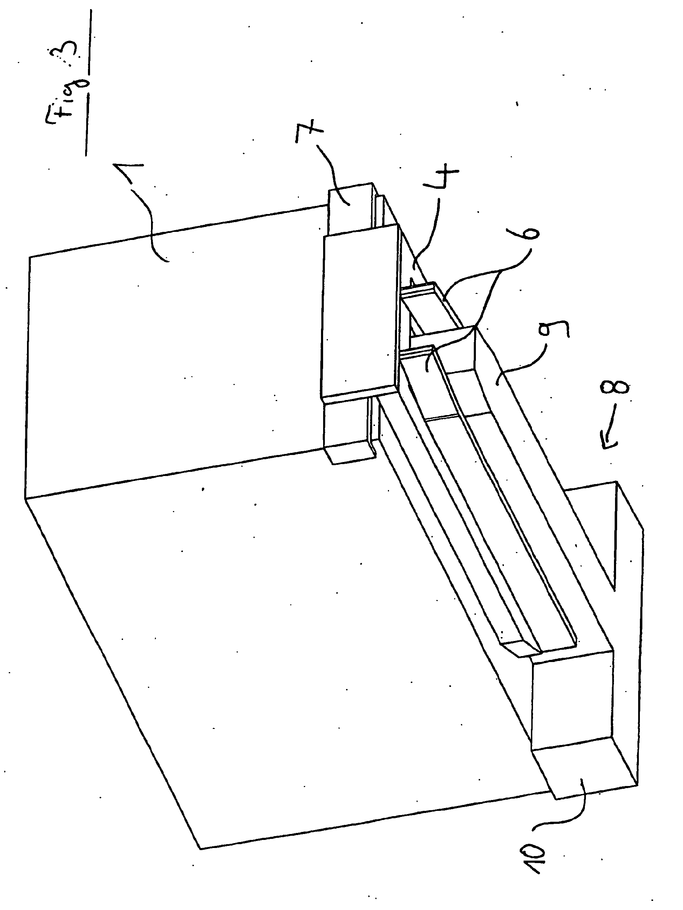

In Figur 3 sind eine Batterieablage 8, ein darauf abgestellter Batterieblock 1 und eine Batterieaufnahme 4 schräg von unten dargestellt. Die Batterieablage 8 umfasst einen Längsbalken 9 und einen Querbalken 10. Wenn, ausgehend von der dargestellten Position des Batterieblocks 1, die Batterieaufnahme 4 abgesenkt und in Längsrichtung des Längsbalkens 9 entfernt wird, steht der Batterieblock 1 fest auf der Batterieablage 8 auf. Ein seitliches Kippen des Batterieblocks 1 ist durch den Querbalken 10 sicher verhindert. Eine derartige Batterieablage 8 kann beispielsweise in einer Ladestation für Batterieblöcke 1 vorgesehen sein. In einer solchen Ladestation können beispielsweise auch mehrere Batterieablagen 8 nebeneinander vorgesehen sein. Hierbei ist es insbesondere zweckmäßig, wenn mehrere parallele Längsbalken 9 an einem längeren Querbalken 10 befestigt sind.

## Patentansprüche

1. System, umfassend ein Flurförderzeug mit einem Batterieblock (1) und einer seitlichen Batterieentnahmeöffnung, sowie eine Handhabungseinrichtung mit einem Gabelhubwagen (3) und einer auf den Gabelhubwagen (3) aufsetzbaren Batterieaufnahme (4) wobei das Flurförderzeug und die Batterieaufnahme (4) derart ausgeführt sind, dass ein in dem Flurförderzeug befindlicher Batterieblock (1) mit der auf dem Gabelhubwagen (3) befindlichen Batterieaufnahme (4) unterfahrbar, anhebbar und aus dem Flurförderzeug heraus bewegbar ist, **dadurch gekennzeichnet, dass** die Batterieaufnahme (4) einen tragenden Rahmen aufweist, mit dem die Gewichtskraft des Batterieblocks (1) auf einer Gabel des Gabelhubwagens (3) abstützbar ist und an dem Rahmen der Batterieaufnahme (4) mindestens ein Abstützelement befestigt ist, mit dem die Batterieaufnahme (4) durch vollständiges Absenken der Gabel des Gabelhubwagens (3) auf dem Boden absetzbar ist.

2. System nach Anspruch 1, **dadurch gekennzeichnet, dass** der tragende Rahmen der Batterieaufnahme (4) im Wesentlichen aus rechteckigen Hohlprofilen (5) besteht.

3. System nach Anspruch 1 oder 2, **dadurch gekennzeichnet, dass** an dem Rahmen der Batterieaufnahme (4) mindestens ein Führungselement befestigt ist, mit dem die Batterieaufnahme (4) relativ zu der Gabel des Gabelhubwagens (3) in seitlicher Richtung festgelegt ist.

4. System nach Anspruch 3, **dadurch gekennzeichnet, dass** das Führungselement und das Abstützelement von einem gemeinsamen Bauteil (6) gebildet sind.

5. System nach einem der Ansprüche 1 bis 4, **dadurch gekennzeichnet, dass** die Batterieaufnahme (4) einen vorzugsweise verstellbaren Anschlag für den Batterieblock (1) aufweist.

6. System nach einem der Ansprüche 1 bis 5, **dadurch gekennzeichnet, dass** das System eine Batterieablage umfasst, auf der der Batterieblock (1) mittels der auf dem Gabelhubwagen (3) befindlichen Batterieaufnahme (4) abstellbar ist.

7. System nach Anspruch 6, **dadurch gekennzeichnet, dass** die Batterieablage einen Längsbalken (9) umfasst, der sich während des Abstellens des Batterieblocks (1) zwischen den Gabelzinken der Gabel des Gabelhubwagens (3) und gegebenenfalls zwischen zwei Abstützelementen der Batterieaufnahme (4) befindet.

8. System nach Anspruch 6 oder 7, **dadurch gekennzeichnet, dass** die Batterieablage einen Querbalken (10) umfasst, der sich während des Abstellens des Batterieblocks (1) vor der Gabel des Gabelhubwagens (3) und unterhalb des Batterieblocks (1) befindet.

9. System nach Anspruch 7 oder 8, **dadurch gekennzeichnet, dass** der Längsbalken (9) und/oder der Querbalken (10) aus Holz ausgebildet ist.

10. Batterieaufnahme (4), die auf einen Gabelhubwagen (3) aufsetzbar ist, wobei die Batterieaufnahme (4) einen tragenden Rahmen aufweist, mit dem die Gewichtskraft des Batterieblocks (1) auf einer Gabel des Gabelhubwagens (3) abstützbar ist und an dem Rahmen der Batterieaufnahme (4) mindestens ein Abstützelement befestigt ist, mit dem die Batterieaufnahme (4) durch vollständiges Absenken der Gabel des Gabelhubwagens (3) auf dem Boden absetzbar ist, zur Verwendung in einem System nach einem der Ansprüche 1 bis 9.

## Claims

1. System, comprising an industrial truck with a battery pack (1) and a lateral battery removal opening, and a handling device with a forklift truck (3) and a battery holder (4), which can be positioned on the forklift truck (3), the industrial truck and the battery holder (4) being designed in such a way that a battery pack (1), located in the industrial truck, with the battery holder (4) located on the forklift truck (3), can be lowered, raised and moved out of the industrial truck, **characterized in that** the battery holder (4) has a bearing frame, with which the force due to weight of the battery pack (1) can be supported on a fork of the forklift truck (3) and at least one supporting element is fastened on the frame of the battery holder (4), with which supporting element the battery holder (4) can be set down on the floor by completely lowering the fork of the forklift truck (3).

2. System according to Claim 1, **characterized in that** the bearing frame of the battery holder (4) substantially comprises rectangular hollow profiles (5).

3. System according to Claim 1 or 2, **characterized in that** at least one guide element is fastened on the frame of the battery holder (4), with which guide element the battery holder (4) is fixed in the lateral direction relative to the fork of the forklift truck (3).

4. System according to Claim 3, **characterized in that** the guide element and the supporting element are formed by a common component part (6).

5. System according to one of Claims 1 to 4, **characterized in that** the battery holder (4) has a preferably adjustable stop for the battery pack (1).

6. System according to one of Claims 1 to 5, **characterized in that** the system comprises a battery store(8), on which the battery pack (1) can be set down by means of the battery holder (4) located on the forklift truck (3).

7. System according to Claim 6, **characterized in that** the battery store comprises a longitudinal bar (9), which, during the setting-down of the battery pack (1), is located between the fork prongs of the fork of the forklift truck (3) and possibly between two supporting elements of the battery holder (4).

8. System according to Claim 6 or 7, **characterized in that** the battery store comprises a transverse bar (10), which, during the setting-down of the battery pack (1), is located in front of the fork of the forklift truck (3) and below the battery pack (1).

9. System according to Claim 7 or 8, **characterized in that** the longitudinal bar (9) and/or the transverse bar (10) is formed from wood.

10. Battery holder (4), which can be positioned on a forklift truck (3), the battery holder (4) having a bearing frame, with which the force due to weight of the battery pack (1) can be supported on a fork of the forklift truck (3) and at least one supporting element is fastened on the frame of the battery holder (4), with which supporting element the battery holder (4) can be set down on the floor by completely lowering the fork of the forklift truck (3), for use in a system according to one of Claims 1 to 9.

## Revendications

1. Système comprenant un chariot de manutention avec un bloc batterie (1) et une ouverture de prélèvement de batterie latérale, ainsi qu'un dispositif de manipulation avec un chariot élévateur à fourche (3) et un compartiment de batterie (4) pouvant être posé sur le chariot élévateur à fourche (3), le chariot de manutention et le compartiment de batterie (4) étant réalisés de telle sorte qu'un bloc batterie (1) se trouvant dans le chariot de manutention puisse être atteint par le dessous, soulevé et déplacé hors du chariot de manutention conjointement avec le compartiment de batterie (4) se trouvant sur le chariot élévateur à fourche (3), **caractérisé en ce que** le compartiment de batterie (4) présente un cadre porteur, avec lequel le poids du bloc batterie (1) sur une fourche du chariot élévateur à fourche (3) peut être supporté et au moins un élément de support est fixé sur le cadre du compartiment de batterie (4), avec lequel le compartiment de batterie (4) peut être déposé sur le sol en abaissant complètement la fourche du chariot élévateur à fourche (3).

2. Système selon la revendication 1, **caractérisé en ce que** le cadre porteur du compartiment de batterie (4) se compose essentiellement de profilés creux rectangulaires (5).

3. Système selon la revendication 1 ou 2, **caractérisé en ce qu'**au moins un élément de guidage est fixé sur le cadre du compartiment de batterie (4), avec lequel le compartiment de batterie (4) est fixé par rapport à la fourche du chariot élévateur à fourche (3) dans la direction latérale.

4. Système selon la revendication 3, **caractérisé en ce que** l'élément de guidage et l'élément de support sont formés par un composant commun (8).

5. Système selon l'une quelconque des revendications 1 à 4, **caractérisé en ce que** le compartiment de batterie (4) présente une butée de préférence réglable pour le bloc batterie (1).

6. Système selon l'une quelconque des revendications 1 à 5, **caractérisé en ce** le système comprend un espace de dépose de batterie (8) sur lequel le bloc batterie (1) peut être déposé au moyen du compartiment de batterie (4) se trouvant sur le chariot élévateur à fourche (3).

7. Système selon la revendication 6, **caractérisé en ce que** l'espace de dépose de batterie comprend une poutre longitudinale (9) qui se trouve pendant la dépose du bloc batterie (1) entre les dents de la fourche du chariot élévateur à fourche (3) et éventuellement entre deux éléments de support du compartiment de batterie (4).

8. Système selon la revendication 6 ou 7, **caractérisé en ce que** l'espace de dépose de batterie comprend une poutre transversale (10) qui se trouve pendant la dépose du bloc batterie (1) devant la fourche du chariot élévateur à fourche (3) et en dessous du bloc batterie (1).

9. Système selon la revendication 7 ou 8, **caractérisé en ce que** la poutre longitudinale (9) et/ou la poutre transversale (10) sont réalisées en bois.

10. Compartiment de batterie (4), qui peut être posé sur un chariot élévateur à fourche (3), le compartiment de batterie (4) présentant un cadre porteur avec lequel le poids du bloc batterie (1) sur une fourche du chariot élévateur à fourche (3) peut être supporté et au moins un élément de support étant fixé sur le cadre du compartiment de batterie (4), avec lequel le compartiment de batterie (4) peut être déposé sur le sol en abaissant complètement la fourche du chariot élévateur à fourche (3), pour l'utilisation dans un système selon l'une quelconque des revendications 1 à 9.
